# EUROPEAN PATENT APPLICATION

(11) **EP 1 352 854 A1**
(43) Date of publication of application: **15.10.2003**
(21) Application number: 03075826.2
(22) Date of filing: 24.03.2003
(51) Int. Cl.: B65G 17/08

(54) **Chain conveyor**

(30) Priority: 09.04.2002 NL 1020342
(71) Applicant: Christiaens, Leonardus Antonius Julio Maria, 5962 NG Horst-Melderslo (NL)
(72) Inventor: Christiaens, Leonardus Antonius Julio Maria, 5962 NG Horst-Melderslo (NL)
(74) Representative: Dorna, Peter

(57) **Abstract**

The invention relates to a conveyor comprising a frame, a conveying element (2) supported by said frame, which comprises successive coupled-together links (3), which links (3) are pivotable with respect to each other about upwardly extending pivots (4), and a driving mechanism for driving said conveying element. A link (3) comprises a projecting part (4) which is circular in shape along part of its circumference, whilst said projecting part (4) is positioned in a complementary recess (7) of an adjacent link (3), wherein the boundary edge of a complementary recess (10) of an adjacent link (3) accommodating a projecting part (4) of a link (3) extends around the projecting part (4) in question through an angle of more than 180°.

## Description

The invention relates to a conveyor comprising a frame, a conveying element supported by said frame, which comprises successive coupled-together links, which links are pivotable with respect to each other about upwardly extending pivots, and a driving mechanism for driving said conveying element, in which a link comprises a projecting part which is circular in shape along part of its circumference, whilst said projecting part is positioned in a complementary recess of an adjacent link.

Such a conveyor is known from Dutch patent No 44407. In this known conveyor, the boundary edge of a recess formed in the link extends through an angle of less than 180°. A wall part being integral with the link is present in said recess, which wall part is overlapped by a wall part of the projecting part of an adjacent link, in which the two wall parts positioned one on top of the other are pivotally interconnected by means of a bolt extending through said wall parts.

According to the invention, the boundary edge of a complementary recess of an adjacent link accommodating a projecting part of a link extends around the projecting part in question through an angle of more than 180°.

Using the construction according to the invention will prevent the projecting part of a link from being pulled out of the recess of an adjacent link in the longitudinal direction of the conveying element when the projecting part of the link in question is present in the recess in question, since the projecting part is surrounded by the boundary edge of the recess in question through an angle of more than 180°. Consequently, it is not necessary to use a bolt for coupling the adjacent links, whilst it is furthermore not necessary to provide a wall part in the recess for supporting an associated wall part of the projecting part, so that the recess can be formed as a continuous recess through the link in question. This leads to a significant simplification of the construction of the conveyor according to the invention in comparison with the conveyor that is known from the aforesaid Dutch patent No 44407. Furthermore, the conveyor that is constructed in this manner allows efficient cleaning, which is important in particular if the conveyor is used in the foodstuffs industry or the like.

A very simple construction of the links is obtained by designing the links as substantially plate-shaped elements.

A simple embodiment of the driving mechanism of the conveyor can be obtained if the links are provided with teeth, which teeth mesh during operation with teeth present on a wheel-shaped element driven by a driving mechanism for the purpose of driving the conveying element.

Depending on the intended use of the conveyor, the teeth may be formed in a side edge of the plate or be made up of a series of holes in the plate-shaped element, whilst the teeth may also be made up of a rack provided on the bottom side of the plate-shaped element.

An efficient transmission of the driving force to the successive links without placing an excessive load on the parts effecting the pivoted connection between the links can be effected if two successive links are provided with boundary edges near a projecting part and near a complementary recess, respectively, which boundary edges extend transversely to the intended direction of movement of the links in a rectilinear part of the conveying element, all this in such a manner that said boundary edges of said two successive links abut against each other in said rectilinear part of the conveying element.

An adequate transmission of force between successive links upon guiding the conveying element through a bend can be effected in that two successive links are provided with further boundary edges on the side of the projecting part and the complementary recess, respectively, that faces away from the boundary edges which extend transversely to the intended direction of movement, which further boundary edges include an angle with each other in a rectilinear part of the conveying element, all this in such a manner that said further boundary edges of said two successive links will abut against each other when the conveying element moves around a guide element so as to make a bend.

The invention will be explained in more detail hereinafter by means of a few possible embodiments of the conveyor according to the invention as shown in the accompanying figures.

Figure 1 is a schematic top plan view of a part of a conveyor according to the invention.

Figure 2 is a cross-sectional view of the conveyor that is shown in Figure 1.

Figure 3 is a larger-scale top plan view of parts of the conveyor that is shown in Figure 1.

Figure 4 is a top plan view corresponding to Figure 3 of a second possible embodiments of a conveyor according to the invention.

Figure 5 is a side elevation of our part of Figure 4.

Figure 6 is a top plan view corresponding to Figure 3 of a third possible embodiments of a conveyor according to the invention.

Figure 7 is a side elevation of a part of Figure 6.

Figure 8 is a top plan view of our part of a further possible embodiments of a conveyor according to the invention.

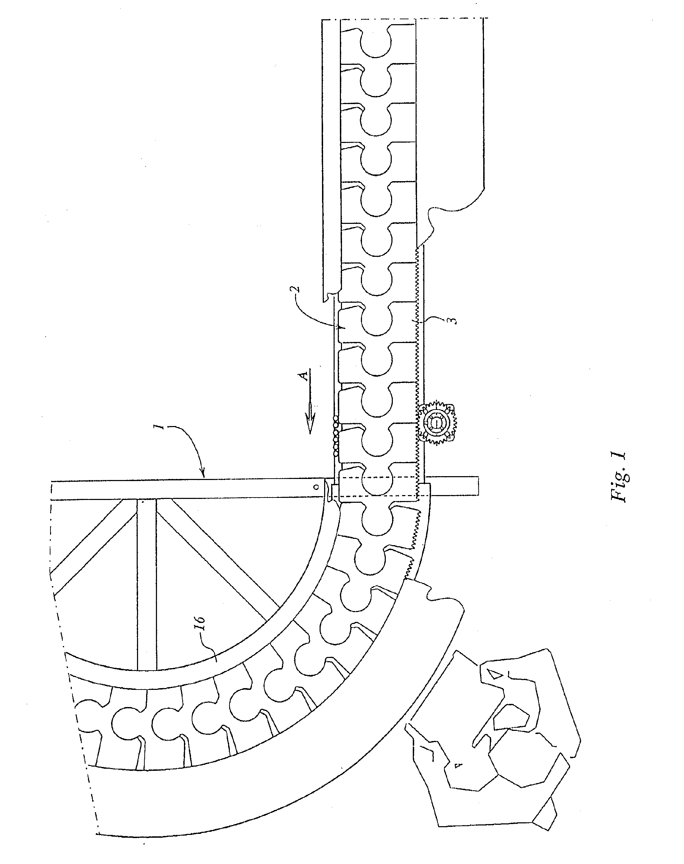

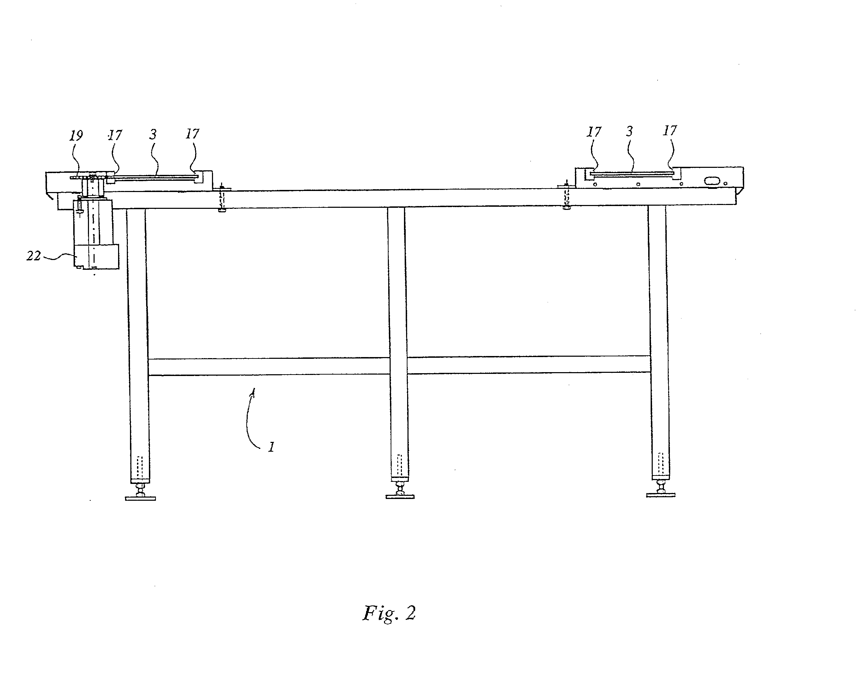

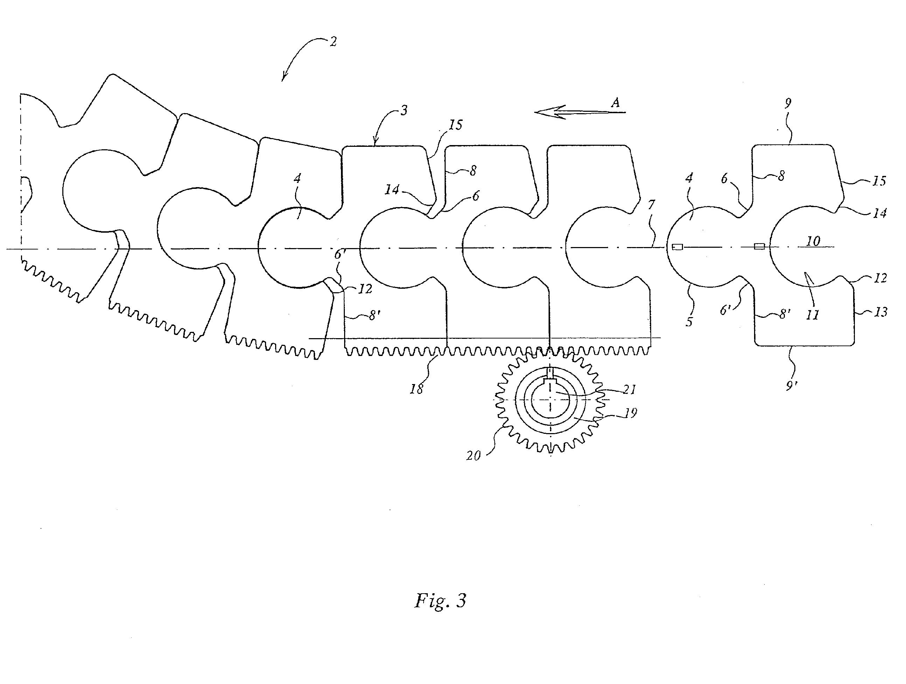

The conveyor that is shown in Figures 1 and 2 comprises a frame 1 built up of horizontal and vertical members, which functions to support an endless (in the illustrated embodiment) conveying element 2. The conveying element 2 is built up of a number of successive coupled-together links 3. As appears from Figure 3, in particular from the link 3 that is shown separately from the other links 3 in Figure 3, each link 3 is provided with a projecting part 4, which has a circular boundary edge 5 that extends through an angle of ± 300°. Further boundary edges 6, 6' of the link 3 join the ends of the circular boundary edge 5 of the projecting part 4, which boundary edges 6, 6' extend in a direction away from each other, at an angle of about 45° to the longitudinal axis 7 of a rectilinear part of the conveying element 2 formed by the successive links 3. Further boundary edges 8, 8' join the ends of the boundary edges 6, 6', respectively, remote from the boundary edge 5, which boundary edges 8, 8' extend perpendicularly to the central axis 7 in a rectilinear part of the conveying element 2, towards the respective side edges 9, 9' of the link 3, which extend perpendicularly to the boundary edges 8 and 8'.

On a side of the link 3 remote from the projecting part 4, the link 3 is furthermore provided with a recess 10 being complementary to the projecting part 4, which recess is bounded by a circular boundary edge 11. A boundary edge 12 extending at an angle towards the side edge 9' joins one end of the boundary edge 11, which boundary edge 12 blends into a boundary edge 13 extending towards the side edge 9' in question, which in turn extends perpendicularly to the aforesaid central axis 7 in a rectilinear part of the conveying element 2. The construction is such that the boundary edges 6' and 9' of a link 3 positioned below the central axis 7, seen in Figure 3, abut against the boundary edges 12 and 13 of an adjacent link 3 in a rectilinear part of the conveying element 2.

As will furthermore be apparent from Figure 3, the part of the boundary edge 11 of the recess 10 that is positioned above the central axis 7 does not continue as far as the boundary edge 5 of the projecting part 4. A boundary edge 14 which slopes upwards in a direction away from the central axis 7 joins the ends of the part of the boundary edge 11 that is positioned above the central axis 7, seen in Figure 3, which boundary edge 14 blends into a boundary edge 15 which slopes upwards in an opposite direction in the direction of a side edge 9 of the link 3. As is shown in Figure 3, the construction is such that the boundary edges 14 and 15 of a link 3 are spaced from the boundary edges 6 and 8 of an adjacent link by some distance in a rectilinear part of the conveying element 2, whilst the boundary edges 6 and 8 of a link abut against the boundary edges 14 and 15 of an adjacent link when the conveying element is guided through a bend by a guide element 16 (Figure 1), and the boundary edges 6' and 8' of a link 3 are spaced from the boundary edges 12 and 13 of the adjacent link by some distance in said curve.

As appears in particular from Figure 2, the successive plate-shaped links 3 are guided and supported at their opposing sides 9 by U-shaped sections 17 supported by the frame. The materials of the plate-shaped links 3 and the sections 17 have been selected with a view to minimizing the frictional forces that occur between the plate-shaped links 3 and the sections 17 during operation.

As is furthermore shown in Figure 3, each link is provided with teeth 18 on the side 9', the construction being such that the adjoining teeth 18 of successive links 3 form a rack, as it were, in a rectilinear part of the conveying element 2. The teeth 18 mate with teeth 20 formed on the circumference of a pinion 19. The pinion 19 is mounted on the outgoing, vertical shaft 21 of a driving motor 20 mounted on the frame.

The endless conveying element 2 can be moved in the direction indicated by the arrow A, or in an opposite direction, so as to convey objects that can be placed directly on the upper sides functioning as a supporting platforms of the links 3, by activating the motor 22.

It will be apparent that an adequate transmission of driving force from one link 2 to the preceding link 3 can be effected in that two boundary edges 6' and 8' of a link 3 abut against boundary edges 12 and 13 of a preceding link 3 or a next link 3 in a rectilinear part of the conveying element 2, whilst two boundary edges 6 and 8 of a link abut against boundary edges 14 and 15 of an adjacent link in a bend portion of the conveying element.

The links can be cut from plate-shaped material in a simple and very precise manner by using laser cutting techniques or water cutting techniques. Preferably, the links 3 are made of stainless steel or a suitable plastic material, which will make it easier to clean and maintain the conveyor and which will furthermore form a suitable starting material for obtaining a minimum frictional resistance in combination with a suitably selected material for the guide sections 17.

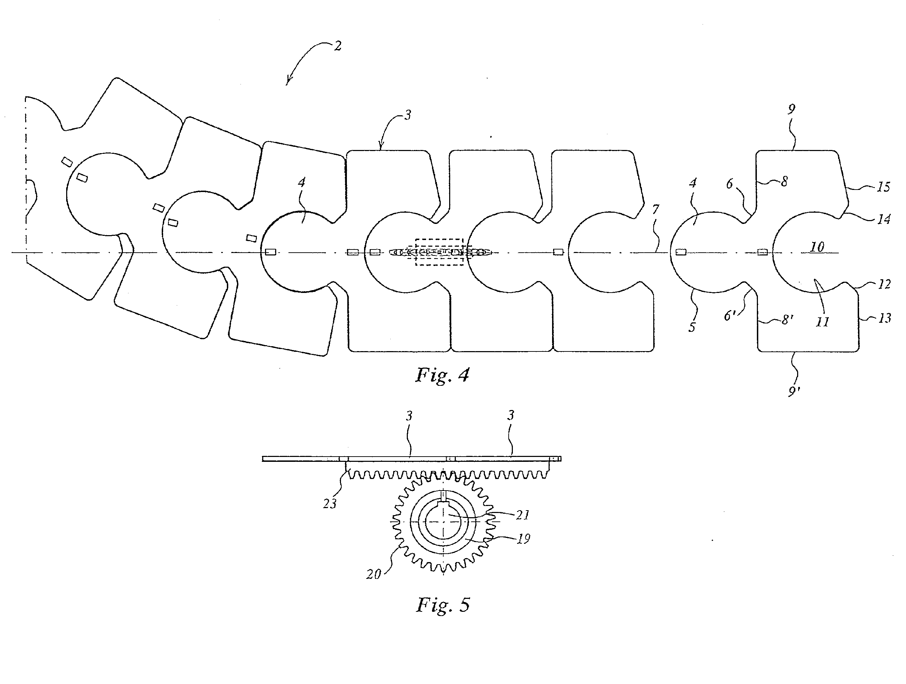

It stands to reason that modifications and/or additions to the embodiment as described above are possible within the spirit and scope of the invention, as will be explained in more detail hereinafter with reference to Figures 4-8. In said Figures 4-8, parts that correspond to parts that have been described above with reference to Figures 1-3 will be indicated by the same numerals as in Figures 1-3.

In the embodiment that is shown in Figures 4 and 5, the links 3 are not provided with teeth arranged on one side of the links 3, but a rack 23 is mounted on the bottom side of each plate-shaped link, the teeth of which rack 23 mesh with the teeth 20 of a pinion 19, which, in this embodiment, is mounted on a horizontal outgoing shaft 21 of a driving motor (not shown in Figures 4 and 5). In this embodiment, the plate-shaped links 3 are of simpler design than the links of the preceding embodiment, whilst the smoothness of the boundary edges 9 of the links 3 that are positioned within the sections 17 ensures that there will be no risk of teeth arranged on the side of a link "hooking" on a respective supporting section 17.

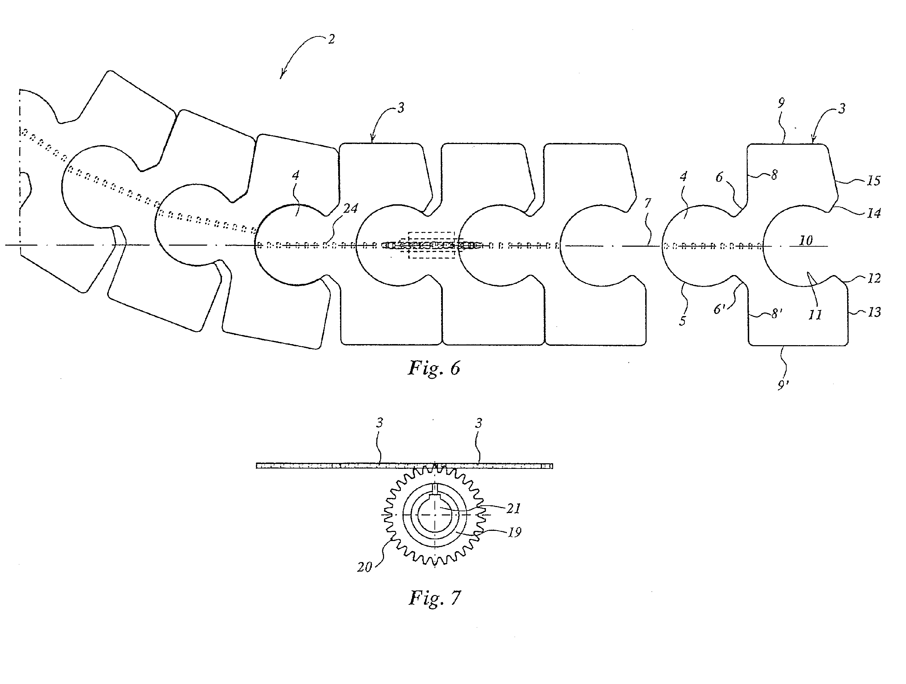

In the embodiment that is shown in Figures 6 and 7, the teeth of the links are formed by holes or recesses 24 formed in the links 3 at positions located a fixed distance apart, into which the teeth 20 of the pinion 19 engage, which pinion is mounted on the horizontal outgoing shaft 21 of a driving motor in this embodiment as well. The advantage of this embodiment over the embodiment that is shown in Figures 4 and 5 is the fact that it is not necessary to use a rack, so that a very simple construction is obtained.

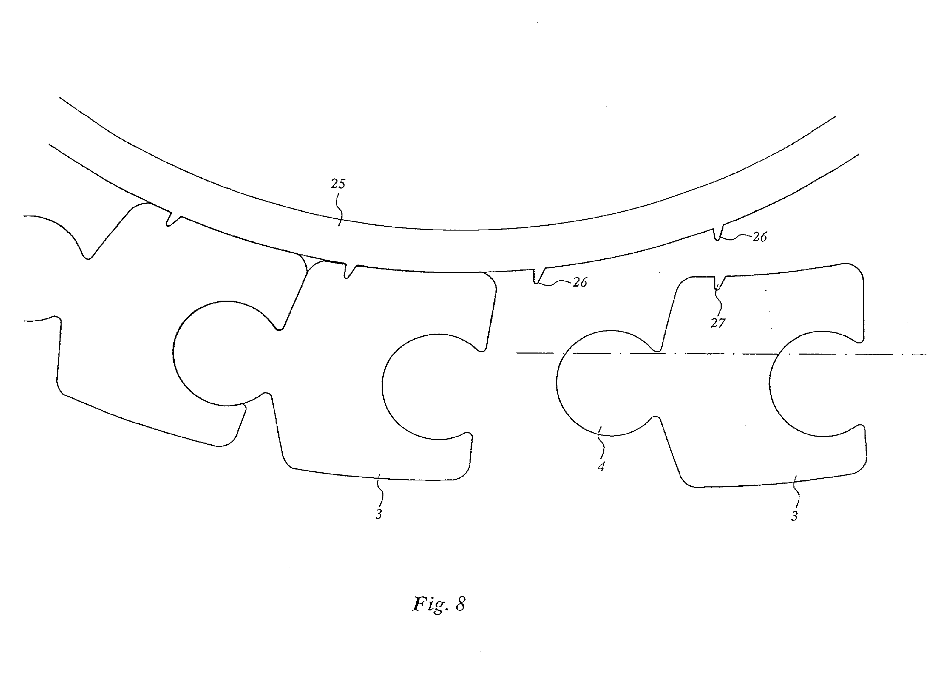

In the embodiment that is shown in Figure 8, the conveyor is provided with a guide element 25 which rotates during operation, on the circumference of which projecting teeth 26 are present. As will furthermore be apparent from Figure 8, the teeth of a link 3 are formed by a single recess 27 formed in one side of the link in question, into which a tooth 26 of the guide element 25 engages for moving the links 3 that have been coupled together so as to form a conveying element. In this case it will suffice to use very simple "teeth" for the links, therefore.

Although an endless conveying element moving in a circular part has been discussed in the above, it will be understood that the invention can also be used with an endless conveying element that moves forward and backward.

## Claims

1. A conveyor comprising a frame, a conveying element (2) supported by said frame, which comprises successive coupled-together links (3), which links are pivotable with respect to each other about upwardly extending pivots, and a driving mechanism (18-20) for driving said conveying element (2), in which a link (3) comprises a projecting part (4) which is circular in shape (5) along part of its circumference, whilst said projecting part (4) is positioned in a complementary recess (7) of an adjacent link, **characterized in that** the boundary edge of a complementary recess (10) of an adjacent link (3) accommodating a projecting part (4) of a link (3) extends around the projecting part (4) in question through an angle of more than 180°.

2. A conveyor according to claim 1, **characterized in that** the links (3) are provided with teeth (18, 23), which teeth mesh during operation with teeth (20) present on a wheel-shaped element (19) driven by the driving mechanism for the purpose of driving the conveying element (2).

3. A conveyor according to any one of the preceding claims, **characterized in that** the links (3) are made up of plate-shaped elements.

4. A conveyor according to claim 3, **characterized in that** teeth (18) are formed in a side edge of a link.

5. A conveyor according to claim 3, **characterized in that** teeth (18) are made up of a series of holes or recesses (24) in the links (3).

6. A conveyor according to claim 3, **characterized in that** teeth are made up of racks (23) provided on the bottom sides of the links (3).

7. A conveyor according to any one of the preceding claims, **characterized in that** two successive links (3) are provided with boundary edges (8', 13) near a projecting part (4) and near a complementary recess (10), respectively, which boundary edges extend transversely to the intended direction of movement (A) of the links (3) in a rectilinear part of the conveying element (2), all this in such a manner that said boundary edges (8', 13) of said two successive links (3) abut against each other in said rectilinear part of the conveying element (2).

8. A conveyor according to claim 7, **characterized in that** two successive links (3) are provided with further boundary edges (8, 15) on the side of the projecting part (4) and the complementary recess (10), respectively, that faces away from the boundary edges (8', 13) which extend transversely to the intended direction of movement (A) and which abut against each other in the rectilinear part of the conveying element (2), which further boundary edges include an angle with each other in a rectilinear part of the conveying element (2), all this in such a manner that said further boundary edges (8, 15) of said two successive links (3) abut against each other when the conveying element (2) moves around a guide element (16) so as to make a bend.

9. A conveyor according to any one of the claims 1 - 3, **characterized in that** the conveyor is provided with a guide element (25) which rotates during operation and which functions to guide the conveying element (2) through a bend, in which the guide element (25) is provided with projecting teeth (6), which mate with recesses (27) formed in the sides of the links (3) for the purpose of driving the conveying element (2).

10. A conveyor according to any one of the preceding claims, **characterized in that** boundary edges of the links (3) extending in the intended direction of movement (A) of the conveying element (2) are positioned within guide sections (17).
